# EUROPEAN PATENT APPLICATION

(11) **EP 2 199 166 A1**
(43) Date of publication of application: **23.06.2010**
(21) Application number: 08172331.4
(22) Date of filing: 19.12.2008
(51) Int. Cl.: B60T 13/66, B60T 13/68, B60T 7/16

(54) **A brake control system for a towed vehicle and method of calibrating the brake control system**

(71) Applicant: Safe-Tec ApS, 4683 Rønnede (DK)
(72) Inventor: Egelund, Preben, 2620, Albertslund (DK)
(74) Representative: Holme Patent A/S

(57) **Abstract**

A brake control system (1) for a towed vehicle (5), the system comprising a first means (13) for determining the braking force of a towing vehicle (2), a second means (17,18) for determining the deceleration of the towing vehicle (5), a third means (7) for activating the wheel brakes of the towed vehicle (5), a fourth means (15) for adjusting the performance of the third means (7), and a controller comprising a fifth means (18) for determining the ratio between the braking force of the towing vehicle and the deceleration of the towing vehicle, a storage means (19) for storing at least a first ratio measured in a non-towing situation, a sixth means (19,18) for comparing a second ratio measured in a towing situation with the stored first ratio, and a seventh means (16) for adjusting the performance of the third means based on said comparison so that the second ratio in the towing situation is approximated to the stored first ratio.

## Description

The present invention relates to a brake control system for a towed vehicle and method for calibrating the brake control system. The system is of the kind comprising a first means for determining the braking force of the towing vehicle, a second means for determining the deceleration of the towing vehicle, a third means for activating the wheel brakes of the towed vehicle, a fourth means for adjusting the performance of the third means, and a controller.

For use in the present application towing is to understood as the process of pulling or drawing behind a vehicle using a chain, line, bar, towing wrecker or some other form of coupling.

If a vehicle breaks down on the road it must be towed to a garage, for example using towing vehicles. In case at least a pair of wheels on a common axle of the vehicle still can rotate the vehicle can be towed either suspended from the wreck of a towing vehicle or be directly coupled to the towing vehicle to be pulled along the road on all wheels or axles. Although towing can take place using different rescue vehicles, many safety considerations to properly tow a vehicle by means of another vehicle must be taken. At least for road safety reasons towing must be made in a way that ensures that a breakdown vehicle coupled to a towing vehicle does not bump into each other during towing and that both vehicles are able to brake in a safe and controllable manner. To illustrate the seriousness of this, references are made to German and Swiss legislation according to which all vehicles having a total axle load exceeding 750 kg on the ground shall be equipped with brakes.

Persons skilled in the art of towing make use of many different deceleration means depending on factors such as the nature and condition of the vehicles, the brakes, and the load. The most simple way of decelerating is performed by a person in the towed vehicle manually and often intuitively actuating the brakes of the towed vehicle in response to how the person experiences the movements of the towing vehicle.

Although towing is described in the present application using a road vehicle as an example, towing of other vehicles, such as boats, caravans, trailers, lorries or tractors can also be towed within the scope of the present invention.

US patent application no. 2002030405 discloses an apparatus and system for automated operation of the brakes on a towed vehicle for example in the conventional hydraulic brakes on an automotive vehicle, by controlling actuation of the towed vehicle brake pedal or other such conventional operating component which is normally manipulated by the operator of a vehicle during driving to actuate braking. The system utilizes a power-actuated tension member such as a cable which is attachable to the towed vehicle brake pedal to pull it downward and thus apply the vehicle brakes in controlled response to commands from a controller mounted on the towing vehicle. The controller includes, and operates in response to, an inertia sensor and related system which monitors deceleration of the towing vehicle caused by application of its brakes. US patent application no. 2002030405 also discloses a manual control for selective optional braking of the towed vehicle by the tow vehicle driver at any desired time. The amount of braking applied to the towed vehicle is proportional to the deceleration of the towing vehicle as a result of the braking force of the brakes of the towing vehicle being applied.

US patent application no. 2004/0195870 A1 discloses a trailer braking system including a controller that supplies pressurized air or hydraulic fluid to an actuator that powers a master brake cylinder on the trailer. A pressure sensor is supplied to provide feedback to the controller so that the controller may vary the braking force being generated by the system. The trailer braking system includes an indicator system that allows the driver of the vehicle towing the trailer to readily determine the status of the trailer braking system. This known trailer braking system monitors the magnitude of the force generated by the vehicle towing the trailer and generates a corresponding force in the trailer brakes.

Thus there are known systems where the brake system of the towed vehicle exchange information with the brake system of the towing vehicle and in response to this information actuates braking of the towed vehicle, but there still exists a need for improvements of road safety during towing; e.g. in Denmark and Europe the above mentioned US originating systems does not comply with EEC towing safety regulations as defined in Council Directive 71/320/EEC. Moreover, most known systems are for overrun brakes.

It is a main aspect according to the present invention to provide a brake control system of the kind mentioned in the opening paragraph for adapting the brakes of a vehicle to be and/or being towed so that said brakes can be controlled from the towing vehicle.

In a second aspect according to the present invention is provided a brake control system of the kind mentioned in the opening paragraph by means of which the towed vehicle can be decelerated proportionally to the braking of the towing vehicle in dependency of the actual conditions and loads of the towed vehicle.

In a third aspect according to the present invention is provided a brake control system of the kind mentioned in the opening paragraph by means of which adapting and adjustment of braking force can be made while the vehicle is running on the road and during towing allows the towing vehicle driver to stay inside the towing vehicle.

In a fourth aspect according to the present invention is provided a brake control system of the kind mentioned in the opening paragraph by means of which the driver of the towing vehicle can brake in a safe manner without any concerns to the towed vehicle on trail.

In a fifth aspect according to the present invention is provided a brake control system of the kind mentioned in the opening paragraph by means of which a towing vehicle can brake a towed vehicle proportionally.

In a sixth aspect according to the present invention is provided a brake control system of the kind mentioned in the opening paragraph by means of which a vehicle having boosted hydraulic brakes or having pneumatic brakes with and without ABS and EBS can be towed without locking the brakes.

In a seventh aspect according to the present invention is provided a brake control system of the kind mentioned in the opening paragraph which comply with general requirements of Council Directive 71/320/EEC of 26 July 1971 on the approximation of the laws of the Member States relating to the braking devices of certain categories of motor vehicles and of their trailers, in particular to Annex II of Council Directive 71/320/EEC with amendments.

The novel unique features whereby this is achieved according to the present invention consists in that the controller comprises
- a fifth means for determining the ratio between the braking force of the towing vehicle and the deceleration of the towing vehicle,
- a storage means for storing at least a first ratio measured in a non-towing situation,
- a sixth means for comparing a second ratio measured in a towing situation with the stored first ratio, and
- a seventh means for adjusting the performance of the third means based on said comparison so that the second ratio in the towing situation is approximated to the stored first ratio.

The controller is advantageously configured to concurrently during towing comparing and re-adjusting the performance of the third means thereby decreasing or increasing braking force of the towing vehicle and of the towed vehicle so that a smooth towing action can be obtained. As input for this re-adjusting of the performance of the third means is used an approximation of the first ratio between the braking force of the towing vehicle and the deceleration of the towing vehicle in the non-towing situation to a second similar ratio measured in the towing situation. The adjusting of the braking force of the towing vehicle can be obtained manually by the driver as occasion requires, or automatically by means of a control unit including a control circuit that calculates, stores and provides various signals representing the approximation to the third means. The controller may be re-adjustable manually by the tow vehicle driver. The controller may in the alternative or in addition include a central processing unit (CPU) and a storage means having a memory device that stores data, such as the measured braking forces and the determined first and second ratios, for subsequent execution by the CPU to provide inputs for automatically and repeated re-adjustment of braking of both vehicles during towing. Re-adjustment can thus be made at predetermined repeated intervals or upon demand both or combinations of these.

The first ratio representing the non-towing situation can for example be calculated for a towing vehicle without trailer or similar hanger moving at constant speed, e.g. 30 km/h, and actuation a deceleration of 3.0 m/sec².

Thus the brake control system utilizes to measure related values of braking force and deceleration of the towing vehicle without trailer as a reference value for subsequent adaptation and re-adjusting of the ratio between the braking force of both the towing vehicle and the towed vehicle. This ratio is used to provide and adapt a control signal to the towed vehicle, in order that the same ratio between braking force and deceleration is obtained for the coupled together vehicles, and that the "road train" can move along in a safe manner at substantially the same speed without superfluous or unintended intermediate brakings thereby keeping the distance between the towed and the towing vehicle substantially constant. The latter is particular important in case the vehicles are coupled together by flexible towing means.

Thus in contrast to the prior art brake control systems the inventive brake control system is controlled based on measurements under various and actual braking situations, knowledge of various and actual physical parameters of the towing vehicle and of the towed vehicle in the towing and non-towing situation.

In the preferred embodiment the third means for activating the wheel brakes of the towed vehicle is an actuator permanently or detachably fixed in the towed vehicle. If the towed vehicle does not have an actuator already the towed vehicle may bring along a detachable actuator for use in towing.

The third means may expediently be configured and adapted to apply braking force directly to the brake pedal in the towed vehicle.

If for example the third means is powered using pneumatic or hydraulic means on the towing vehicle, e.g. pneumatic or hydraulic cylinders, said means may expediently be connected to the brake control system of the towed vehicle by a hose to use the same means to control the breaking force and deceleration of the towed vehicle. The hose may be coupled to a pneumatic or hydraulic cylinder acting directly or indirectly on the brake system of the towed vehicle, e.g. for applying pressure on the brake pedal of the towed vehicle.

Pneumatic and hydraulic cylinders get their power from a source of pressurized hydraulic fluid or air, respectively. This source may be a separate source on the towing vehicle or be integrated in or part of the brake control system of the towing vehicle. Alternatively the source may be an air tank placed on the towed vehicle, e.g. on the passenger seat next to the brake pedal, where the air tank can be supplied from the towing vehicle as described later. The cylinder consists of a cylinder barrel, in which a piston connected to a piston rod moves back and forth. The barrel is closed on each end; at one end by the cylinder bottom and by the opposite end by the cylinder head where the piston rod comes out of the cylinder. The pneumnatic or hydraulic pressure acts on the piston to do linear work and motion. If the free reciprocatable end of the piston rod is put in contact with the brake pedal actuation of the brake pedal can be made in a simple manner by changing the pressure in the barrel. This is controlled remotely from the brake pedal on towing vehicle. The end of the piston rod coming out of the barrel may advantageeously be provided with an enlargement fitting the pedal design so that a good and releable contact with the brake pedal in the towed vehicle is maintained during towing. The enlargement may be permanently secured to the piston rod, or may be detachable. Enlargements may be a plate or encasing and may come in varios sizes depending on the configuration of the brake pedal of the vehicle to be towed.

Adjustment of the performance of the third means for activating the wheel brakes of the towed vehicle may advantageously be carried out at each application or selected applications of the brakes of the towing vehicle in order to achieve highest possible road safety. Whether or not adjustment must be made may depend on the towing situation. If for example the coupling between the two vehicles is rigid less adjustments actions of the third means may be required than if a flexible towing wire is used for coupling the vehicles together.

Such adjustment can in a simple manner be made if the fourth means comprises a regulator comprising a valve for regulating the pressure of the pneumatic or hydraulic means on the towing vehicle. This regulator can advantageously be operated from inside the towing vehicle by adjusting the valve, either manually or automatically as described above.

In an alternative embodiment the adjustment of the performance of the third means for activating the wheel brakes of the towed vehicle is based on stored data for different towing situations and not only one, to thereby obtain a better control of the brake control system in any unexpected towing situation.

The first means for determining the braking force of the towing vehicle may simply be a manometer measuring the braking pressure of the towing vehicle, however other equivalent means can also be used if considered appropriate. A pedal force sensor can be mentioned as an alternative to a manometer.

In a preferred configuration of the brake control system according to the present invention the first means may comprise a pressure transducer that converts the braking pressure to a first electric signal representing the braking force.

In an exemplary embodiment the second means may comprise a decelerometer for measuring at least the deceleration of the towing vehicle. If suitable the decelerometer measures both inertial deceleration and acceleration of the towing vehicle when the towing vehicle moves both forward and backwards. A deceleration transducer may be used for converting said deceleration to a second electric signal representing the deceleration of the towing vehicle. Also, an acceleration transducer may be included for converting the acceleration of the towing vehicle to another electric signal representing the acceleration of the towing vehicle if desired, to obtain additional up-to-date data of the towing situation and performance of the combined means constituting the inventive brake control system.

The fifth means for determining the ratio between the braking force of the towing vehicle and the deceleration of the towing vehicle may determine said ratio based on the first and second electric signal to promptly calibrate the brake control system according to the present invention in response to deviations in the approximation between the first ratio and the second ratio, to tow in the smoothest possible way without short stops or jamming on the brakes.

The invention further relates to a method for calibrating the brake control system described above.

The method comprises
a. measuring the first ratio in a non-towing situation,
b. storing at least the first ratio on the storage means,
c. measuring the second ratio in a towing situation,
d. comparing the first and second ratio,
e. adjusting the performance of the third means based on said comparison so that the second ratio in the towing situation is substantially equal to the stored first ratio, and
f.repeating steps a to e depending on the towing condition.

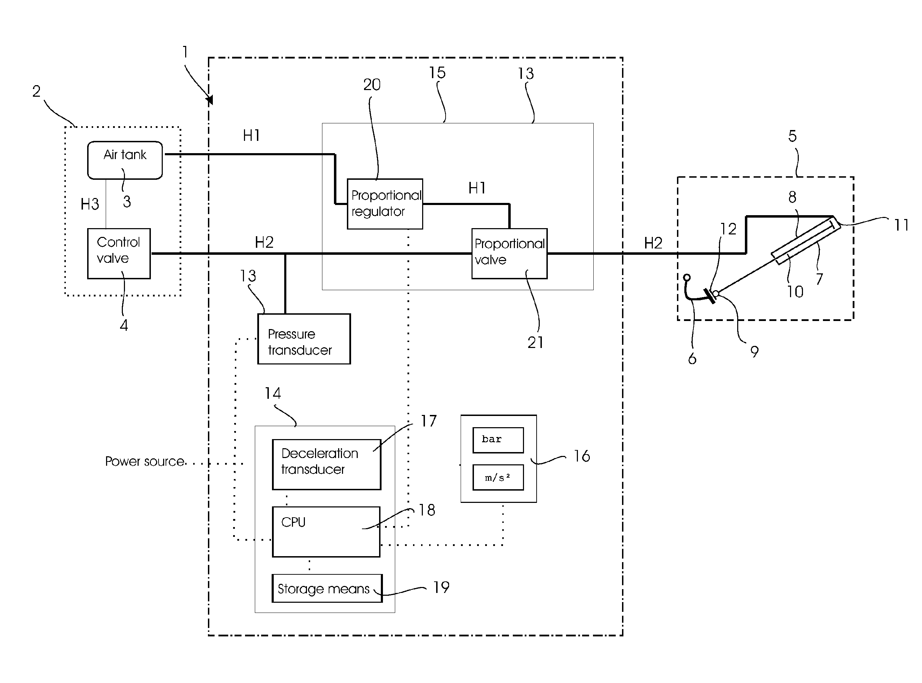

The brake control system will be described with reference to the only figure representing a diagram of a simple prototype of the brake control system according to the present invention.

The schematic diagram illustrates a brake control system 1, indicated in the dash-dotted frame, implemented on a conventional towing vehicle 2, the latter being indicated in the dotted frame. The conventional towing vehicle 2 is commonly equipped with a pneumatic means 3, including a pressurized air tank 3 and a control valve 4 for controlling the braking force of the towed vehicle 5. The towed vehicle 5 is shown to the right in the figure and is represented by the dashed frame 5. The towed vehicle 5 has a brake pedal 6 and actuator 7 acting as the third means for applying and relieving pressure on the brake pedal 6. The actuator is in the case shown a pneumatic cylinder 8, having a piston 9 connected to a piston rod 10. The piston rod 10 is reciprocatingly arranged inside a cylinder barrel 11. The piston 9 is, in the case shown, provided with a plate 12 to increase and safeguard contact with the brake pedal 6 during towing, however any other suitable means for maintenance of contact can be incorporated quite as well.

The conventional towing vehicle 2 is configured with the brake control system 1 according to the present invention. The brake control system 1 consist of a first means, exemplified by a pressure transducer 13, a controller 14, a fourth means 15 for adjusting the performance of the third means 7, and a seventh means, exemplified as a console 16, which displays information of the performance of the third means 7 to the driver of the towing vehicle 2 and optionally, if the brake control system 1 is manually operated, allowing the driver of the towing vehicle 2 to actuate adjustment of the performance of the third means 7. The displayed information may e.g. be the deceleration/acceleration (m/sec²) of the towing vehicle and the braking force (bar) of the towing vehicle to obtain, use and act upon such data for calculation of the first ratio and the second ratio.

The controller 14 includes at least the second means, exemplified by a deceleration transducer 17, a CPU 18 constituting the fifth means, and a sixth means 19 represented by the storage means, such as a memory device, optionally including a database which can be consulted for towing under comparative conditions. The controller 14 may be coupled to or include a power source such as a battery as indicated by the dotted line connecting to a power source, e.g. a 24 V power source.

The brake pressure from towing vehicle is sensed by pressure transducer 13 and supplied to the actuator 7 via hose H2 and proportional valve 21. The pressure of the air from the air tank 3 is used via hose H1 for controlling proportional valve 21 by proportional regulator 20 and may optionally be used for supplying air tanks on the towed vehicle 5. Thus the force of actuator 7 is controlled from control valve 4 by means of proportional valve 21 in response to signals from the controller 14 passing through proportional regulator 20. The air tank 3 may be coupled via hose H3 to the control valve 4 as part of the brake system of the towing vehicle.

The pressure transducer 13 measures the braking force of the towing vehicle 2 and the deceleration transducer 17 measures the deceleration of the towing vehicle 2. Each transducers 13,17 convert the measurement into an electric signal, the first electric signal and the second signal, respectively, both of which is transmitted to the CPU 18 for calculating the second ratio once the first ratio has been established as described previously. The CPU 18 calculates the degree of change of the braking force and/or deceleration of the towing vehicle 2 which is needed to adjust towing. Based on the values of the first ratio in relation to the second ratio the CPU is programmed to calculate the size of the mechanical regulation input signal to the regulator for adjustment. Thus the CPU sends an electric signal representing this information to inform the proportional regulator. All electric signals are indicated in dotted line.

The seventh means for adjusting the performance of the third means based on the comparison that the second ratio in the towing situation is approximated to the stored first ratio in the non-towing situation may be the console 16 or be an integrated part of the combined function, e.g. output from the CPU.

The advantages of the brake control system according to the present invention are numerous. First of all, both vehicles share a common brake control system and the braking of both vehicles can therefore be mutually controlled. Moreover, due to the mutual and interrelated adaptation and adjustment of the braking force and deceleration of both the towing vehicle and the towed vehicle, both vehicles are braked and contribute to the brake work for all decelerations between approximately 0,4 m/sec² and full stopping. A further advantage is that braking of the towed vehicle can be made from the driver seat of the towing vehicle using the standard brake pedal. Furthermore, if proper steering of the towed vehicle is established a driver inside the towed vehicle is not needed. The coupling together of the tow vehicle may be made using universal quick-lock coupling elements, which may be permanent, detachable or integrated on the towing vehicle and detachable coupled to the towed vehicle.

The inventive brake control system and method provide for improved road safety when towing, reduced wear of the brakes of the towing vehicle, is compatible with both pneumatic and hydraulic brake control systems, the brakes of the towed vehicle needs no disassembling, simple operation, optimum braking of the entire road train irrespective of the conditions of the subjacent surface on which the vehicles are rolling, and can be used for towing vehicles having ABS or EBS. To the knowledge of the inventors of the present invention no disadvantages are accompanying the use and implementation of the brake control system and method according to the present invention, in particular because the brake control system can be mounted on any towing vehicle and brake control system and because the method can be controlled from the driver seat inside said towing vehicle using built in brake pedal.

Even large vehicles can be towed, e.g. weighing 32.000 kg. Suitable towing means for use with the brake control system and method according to the present invention may e.g. be the SafeBar with triangle concept obtainable from the applicant (Safe-Tec ApS, Industrivej 17b, DK-4683 Rønnede).

## Claims

1. A brake control system (1) for a towed vehicle (5), the system comprising
- a first means (13) for determining the braking force of a towing vehicle (2),
- a second means (17,18) for determining the deceleration of the towing vehicle (5),
- a third means (7) for activating the wheel brakes of the towed vehicle (5),
- a fourth means (15) for adjusting the performance of the third means (7), and
- a controller (14),
**characterized in that** the controller (14) comprises
- a fifth means (18) for determining the ratio between the braking force of the towing vehicle and the deceleration of the towing vehicle,
- a storage means (19) for storing at least a first ratio measured in a non-towing situation,
- a sixth means (19,18) for comparing a second ratio measured in a towing situation with the stored first ratio, and
- a seventh means (16) for adjusting the performance of the third means based on said comparison so that the second ratio in the towing situation is approximated to the stored first ratio.

2. A brake control system (1) according to claim 1, **characterized in that** the third means (7) is an actuator (7) permanently or detachably fixed in the towed vehicle (5).

3. A brake control system (1) according to any of the claims 1 or 2, **characterized in that** the third means (7) is adapted to apply braking force directly to the brake pedal (6) in the towed vehicle (5).

4. A brake control system (1) according to any of the claims 1, 2 or 3, **characterized in that** the third means (7) is powered using pneumatic or hydraulic means (3,4) on the towing vehicle (2), said means (3,4) is connected to the brake control system (1) by a hose (H1,H2).

5. A brake control system (1) according to any of the preceding claims 1 - 4, **characterized in that** the adjustment of the performance of the third means (7) is carried out at each application or selected applications of the brakes of the towing vehicle (2).

6. A brake control system (1) according to any of the preceding claims 1 - 5, **characterized in** the fourth means (15) comprises a regulator (20) comprising a valve (21) for regulating the pressure of the pneumatic or hydraulic means (2,3) on the towing vehicle (2).

7. A brake control system (1) according to any of the preceding claims 1 - 6, **characterized in that** the adjustment of the performance of the third means (7) is based on stored data for different towing situations.

8. A brake control system according to any of the preceding claims 1 - 7, **characterized in that** the first means (13) is a manometer or a pedal force sensor measuring the braking pressure of the towing vehicle (2).

9. A brake control system (1) according to any of the preceding claims 1 - 8, **characterized in that** the first means (13) comprises a pressure transducer (13) converting the braking pressure to a first electric signal representing the braking force.

10. A brake control system (1) according to any of the preceding claims 1 - 9, **characterized in that** second means (17) comprises a decelerometer measuring at least the deceleration of the towing vehicle (2).

11. A brake control system (1) according to any of the preceding claims 1 - 10, **characterized in that** the second means (17) comprises a deceleration transducer (17) converting the deceleration to a second electric signal representing the deceleration of the towing vehicle (2).

12. A brake control system (1) according to any of the preceding claims 1 - 11, **characterized in that** the fifth means (18) determines the ratio based on the first and second electric signal.

13. A method for calibrating a brake control system (1) according to any of the preceding claims 1 to 12,
**characterized in that** the method comprises:
a. measuring the first ratio in a non-towing situation,
b. storing the first ratio on the storage means (19),
c. measuring the second ratio in a towing situation,
d. comparing the first and second ratio,
e. adjusting the performance of the third means based on said comparison so that the second ratio in the towing situation is substantially equal to the stored first ratio, and
f. repeating steps a to e depending on the towing condition.
